# Europäisches Patentamt

# European Patent Office

# Office européen des brevets

(11) Veröffentlichungsnummer: **0 001 226**
**B1**

## EUROPÄISCHE PATENTSCHRIFT

(45) Veröffentlichungstag der Patentschrift:
27.01.82

(21) Anmeldenummer: 78100770.3

(22) Anmeldetag: 28.08.78

(51) Int. Cl.³: **G 05 D 21/02,** C 01 B 17/90,
**G 01 N 27/56**

(54) **Vorrichtung zum Bestimmen des Redoxpotentials beim Regenerieren von verunreinigter wasserhaltiger Abfallschwefelsäure in Pauling-Apparaturen.**

(30) Priorität: 08.09.77 DE 2740405

(43) Veröffentlichungstag der Anmeldung:
04.04.79 Patentblatt 79/7

(45) Bekanntmachung des Hinweises auf die Patenterteilung:
27.01.82 Patentblatt 82/4

(84) Benannte Vertragsstaaten:
DE FR GB

(73) Patentinhaber: HOECHST AKTIENGESELLSCHAFT,
Postfach 80 03 20, D-6230 Frankfurt/Main 80 (DE)

(72) Erfinder: Bodenbenner, Kurt, Dr.,
Hermann-Kaiser-Strasse 4, D-6200 Wiesbaden (DE)
Erfinder: Cramer, Jürgen, Dr., Bergstrasse 27,
D-6239 Eppstein/Taunus (DE)
Erfinder: Müller, Gerhard, Dipl.-Ing., Feldbergstrasse 76,
D-6233 Kelkheim (Taunus) (DE)
Erfinder: von Plessen, Helmold, Dr., Unter den
Kastanien 32a, D-6233 Kelkheim (Taunus) (DE)

(56) Entgegenhaltungen:
DE-A-2 162 562
DE-A-2 427 526
DE-B-2 616 768
DE-B-2 620 581
DE-C-299 774
BRITISH CORROSION JOURNAL Vol. 1,
November 1966,
E. MAAHN, »Corrosion of Cast Iron in Concentrated Sulphuric Acid Under Potentiostatic Conditions«,
Seite 350—354
O. A. NEUMÜLLER, »Römpps Chemie-Lexikon«,
1973, W. Keller u. Co., Stuttgart,
Seite 1618

## Vorrichtung zum Bestimmen des Redoxpotentials beim Regenerieren von verunreinigter wasserhaltiger Abfallschwefelsäure in Pauling-Apparaturen

Gegenstand der Erfindung ist eine Vorrichtung zum Bestimmen des Redoxpotentials des Kesselinhaltes und zum Regeln der Zugabe von Oxidationsmittel beim Regenerieren von verunreinigter, wasserhaltiger Abfallschwefelsäure in Pauling-Apparaturen.

Bei manchen chemischen Prozessen entsteht eine Schwefelsäure als Abfallprodukt, die neben Wasser organische Bestandteile, Mineralsalze, Chlorwasserstoff, Salpetersäure und andere Verunreinigungen enthalten kann. Solche Abfallsäure mit 70—90% $H_2SO_4$ kann nach dem von H. Pauling im deutschen Patent Nr. 299 774 beschriebenen Verfahren regeneriert werden. Dabei wird die Abfallschwefelsäure einer Abtriebssäule zugeführt, die auf einen als Destillationsblase dienenden Kessel aus grauem Gußeisen montiert ist. Der mit Gas oder Mineralöl befeuerte Kessel ist mit siedender konzentrierter Schwefelsäure gefüllt, die entsprechend dem Zufluß an verunreinigter Säure abgezogen und gekühlt wird. Der mit einem langsam laufenden Rührer versehene Pauling-Kessel wirkt als Rührkesselreaktor mit vollständiger Rückvermischung. Das in der Abfallsäure enthaltene Wasser verläßt die Abtriebssäule in Form von etwa 130° C bis 150° C heißen Brüden.

Die als Destillationsblase dienenden Kessel und ihre Deckel werden aus lamellarem Grauguß mit perlitischem Gefüge angefertigt. Untersuchungen des Gußeisens zeigten Graphitstrukturen A3 bis C3 nach ASTM in perlitischem Gefüge und die Zusammensetzung C 2,9 bis 3,5%; Si 1,6 bis 1,9%; P 0,2 bis 0,6%; S 0,1 bis 0,15%; Mn 0,35 bis 0,65%; Cr 0,05 bis 0,2% Ni 0,04 bis 0,08%; Cu 0,07 bis 0,1%; Al 0,03%; Rest Eisen und die bei Gußeisen üblichen Verunreinigungen. Ausführliche Beschreibungen des Pauling-Verfahrens sind bekannt aus: P. Parrish, Trans. Inst. Chem. Engrs. 19 (1941), 1—24. F. Rumford, Chem. Eng. Materials, London 1954, 57—75, BIOS Final Report No. 243, FIAT Final Report No. 1187, Film K-18.

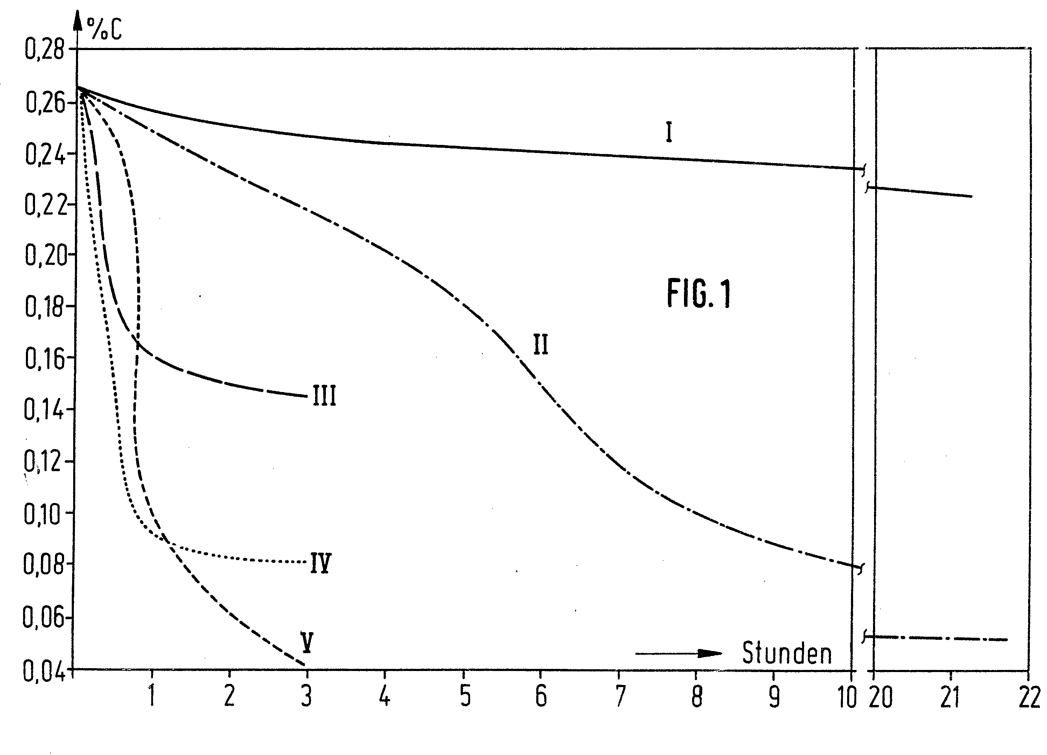

Die bei der Ausübung des Verfahrens auftretende Korrosion der Graugußkessel durch siedende konzentrierte Schwefelsäure wurde von E. Maahn (Brit. Corros. J. 1966, Bd. 1, S. 350) untersucht. Die Korrosion ist abhängig vom Korrosionspotential des grauen Gußeisens gegenüber der heißen Schwefelsäure. Bei geeigneter Führung des Prozesses wird das Gußeisen in der siedenden konzentrierten Schwefelsäure passiviert, es bedeckt sich mit einer dünnen Schicht von Eisen(III)-Salzen, so daß der Korrosionsverlust bis etwa 1 cm/Jahr beträgt. Enthält die Säure reduzierend wirkende Bestandteile, beispielsweise organische Verunreinigungen, so wird die Passivierung des Kesselmaterials erschwert und es tritt verstärkte Korrosion ein. Zur Vermeidung dieses Nachteils kann der Schwefelsäure ein Oxidationsmittel, z. B. Salpetersäure oder Nitrosylschwefelsäure zugemischt werden. Als starkes Oxidationsmittel erhöht $HNO_3$ das Redoxpotential des Kesselinhaltes und beschleunigt den Abbau der organischen Bestandteile, so daß dieser mit technisch befriedigender Geschwindigkeit abläuft (Figur 1);

| Einsatz | I | Pro 1 kg $H_2SO_4$ | 4 g Phthalsäureanhydrid |
|---|---|---|---|
| | II | Pro 1 kg $H_2SO_4$ | 4 g Phthalsäureanhydrid u. 2,0 g $CuSO_4 \times 5\,H_2O + 1,0$ g $FeSO_4 \times 7\,H_2O$ |
| | III | Pro 1 kg $H_2SO_4$ | 4 g Phthalsäureanhydrid u. 2,51 g $HNO_3$ 100% |
| | IV | Pro 1 kg $H_2SO_4$ | 4 g Phthalsäureanhydrid u. 5,1 g $HNO_3$ 100% |
| | V | Pro 1 kg $H_2SO_4$ | 4 g Phthalsäureanhydrid u. 6,9 g $NaNO_3$) |

So wurde beispielsweise bei Einspeisung von 600 l/h einer 70%igen Abfallschwefelsäure mit 0,04—0,05% Kohlenstoffgehalt in einen technischen Pauling-Apparat ohne $HNO_3$ ein Potential von 930 mV gegen gesättigte Kalomel-Elektrode gemessen, während unter Zugabe von 2,2 kg Salpetersäure/h, gerechnet als 100%ige Salpetersäure, 1000 mV bestimmt wurden.

Als Abtriebssäule wird eine speziell gestaltete Glockenbodenkolonne aus Siliziumguß verwendet. Es können aber auch Füllkörperkolonnen angewendet werden, wenn organisch verunreinigte Abfallschwefelsäure zur Bildung kohlenstoffhaltiger Abscheidungen in der Abtriebssäule neigt. Diese müssen dann bereits teilweise in der Abtriebssäule oxidiert werden. Passiert dagegen organisch verunreinigte Abfallschwefelsäure die Abtriebssäule ohne Abscheidungen, so können die kohlenstoffhaltigen Bestandteile im Kessel oxidiert werden.

Die Anwendung von Salpetersäure als Hilfsmittel bei der Aufarbeitung von Abfallschwefelsäure in Pauling-Apparaten kann aber Schwierigkeiten mit sich bringen. Enthält die Schwefelsäure nitrierbare organische Substanzen, beispielsweise bestimmte aromatische Amine, so können entstehende nitrierte Verbindungen in unverwünschter Weise flüchtig oder schwierig abzubauen sein. Auch können derartige Nitroverbindungen in manchen Fällen ein Arbeitsrisiko ergeben. Ein Teil der zugesetzten Salpetersäure kann ferner mit Schwefelsäure unter Bildung von Nitrosylschwefelsäure reagieren, die als beständige Verbindung in der heißen Schwefelsäure enthalten bleibt. Technischen Aufwand erfordert auch die Beseitigung nitroser Gase, die sich bei der Umsetzung von Salpetersäure bilden. Die Kostspieligkeit von Salpetersäure ist gleichfalls von Bedeutung.

Für die einwandfreie Führung des Prozesses ist es daher erforderlich, den Einsatz von Salpetersäure so gering wie möglich zu halten. Es bestand deshalb die Aufgabe, eine Vorrichtung zu schaffen, mit der der Einsatz der Salpetersäure so geregelt werden kann, daß die für die Zwecke der Oxidation der organischen Verunreinigungen der Abfallschwefelsäure sowie des Korrosionsschutzes gerade ausreichende Menge zudosiert wird.

Die Aufgabe wird bei einer Vorrichtung zum Bestimmen des Redoxpotentials des Kesselinhaltes und zum Regeln der Zugabe von Oxidationsmittel beim Regenerieren von verunreinigter, wasserhaltiger Abfallschwefelsäure in Pauling-Apparaturen, wobei der Siedekessel der Pauling-Apparatur eine Elektrode bildet und mittels einer elektrischen Brücke mit einer Bezugselektrode verbunden ist, erfindungsgemäß dadurch gelöst, daß zur räumlichen Trennung der beiden Elektroden in der elektrischen Brücke eine Kationenaustauschermembran angeordnet ist. Es hat sich als zweckmäßig erwiesen, in die elektrische Brücke Schwefelsäure auf der Kesselseite und Kaliumchloridlösung auf der Bezugselektrodenseite einzudosieren und die Kationenaustauschermembran zwischen diesen Dosiereinlaßöffnungen anzuordnen. Als Bezugselektrode eignet sich eine Kalomel-Elektrode. Das zwischen Kesselwand und Bezugselektrode gemessene Potential wird in bekannter Weise einem Regler aufgegeben, mit dem eine Dosiervorrichtung, beispielsweise ein Ventil oder eine Dosierpumpe für die Zugabe des Oxidationsmittels in den Kessel gesteuert wird.

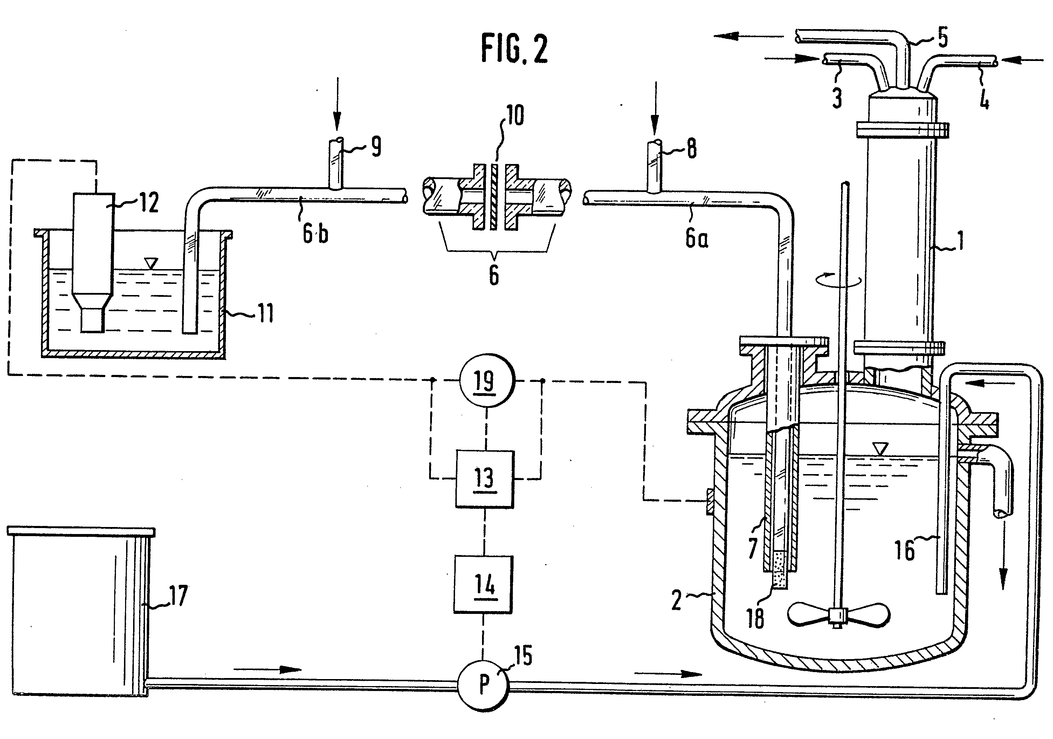

Die erfindungsgemäße Vorrichtung wird im folgenden anhand der Figur 2 in der sie schematisch und beispielsweise abgebildet ist, näher erläutert.

Auf dem Siedekessel 2 der Pauling-Apparatur, der eine Elektrode bildet, ist die Abtriebssäule 1 aufgesetzt. Abfallschwefelsäure und gegebenenfalls Salpetersäure werden über Leitungen 3 bzw. 4 der Abtriebssäule 1 zugeführt, die Brüden über Leitung 5 abgeführt. In den Siedekessel 2 ragt der Schenkel 6a der elektrischen Brücke 6. Im Siedekessel 2 ist der Schenkel 6a durch ein Schutzrohr 7, z. B. aus Silicium-Guß gegen die Flüssigkeitsbewegung im Kessel geschützt. Um den Eintritt von Eisensulfatkristallen aus dem siedenden Kesselinhalt in den Schwefelsäure gefüllten Schenkel 6a zu verhindern, kann der Schenkel 6a mit grobporigem, schwefelsäurebeständigem Material 18, z. B. Frittenglas vom Typ A1 oder grobem Quarzsand, verschlossen sein. Das Problem kann aber auch durch Ausziehen des Schenkelendes zu einer Kapillaren gelöst werden. Der Schenkel 6a ist ferner mit einem Einlaß 8 für Schwefelsäure versehen. Der Schenkel 6b der elektrischen Brücke 6 ist mit einem Einlaß 9 für gesättigte Kaliumchloridlösung versehen und durch ein Kationenaustauschmembran 10 vom Schenkel 6a getrennt. Als Kationenaustauschermembran eignen sich die unter dem Namen Nafion® XR 170 bekanntgewordenen Membranen der Fa. E. I. Du Pont de Nemours und Co. Diese Membranen werden durch Polymerisation von Tetrafluoräthylen $C_2F_4$ und (2.2.1-Trifluoräthylen)-(2'2'1'1'-tetrafluor-2'-sulfo)-äthyläther $CF_2=CF-OCF_2-CF_2SO_3H$ hergestellt. Der Schenkel 6b der elektrischen Brücke 6 taucht in das Einstellgefäß 11 der Bezugselektrode 12, das bei Verwendung einer Kalomel-Elektrode mit gesättigter Kaliumchloridlösung gefüllt ist. Das zwischen Bezugselektrode 12 und Kessel 2 gemessene Potential wird über einen Potentialschreiber 13 einem Regler 14 aufgegeben und dort mit einem vorgegebenen Potential verglichen. Der Regler 14 steuert eine Salpetersäurepumpe 15, die Salpetersäure vom Vorratsgefäß 17 über ein Tauchrohr 16 in den Pauling-Kessel 2 einspeist. Wird gleichzeitig in bekannter Weise ein Gemisch von Abfallschwefelsäure und Salpetersäure der Abtriebssäule 1 aufgegeben, so verringert sich die durch das Tauchrohr 16 in den Kessel 2 eingespeiste Menge Salpetersäure, da die Regelung die durch die Abtriebssäule hindurch in den Kessel gelangenden Anteile Salpetersäure berücksichtigt. Ähnlich gestaltet sich das Verfahren, wenn der Abfallschwefelsäure gemäß der deutschen Patentanmeldung 2 616 768 Nitrosylschwefelsäure $NOHSO_4$ zugemischt wird.

Mit der erfindungsgemäßen Vorrichtung kann besonders gut eine Pauling-Apparatur betrieben werden, in der organisch belastete Abfallschwefelsäure beispielsweise aus der Herstellung von Farben und Farbenvorprodukten aufbereitet wird.

### Beispiel 1

Es wurde eine Pauling-Apparatur aus ®Duran Glas benutzt. Der elektrisch beheizte Siedekessel faßte ein Flüssigkeitsvolumen von etwa 3 l. Mit Schliffverbindungen waren auf den Siedekessel folgende Apparateteile gesetzt:

eine 40 cm lange Glaskolonne, gefüllt mit 4 mm Glaswedeln als Abtriebssäule,
ein 25 cm langer Stab aus lamellarem Grauguß mit perlitischem Gefüge als Arbeitselektrode,
ein langsam umlaufender, elektrisch angetriebener Rührer,
die elektrische Brücke,
das Tauchrohr für Salpetersäure,
ein Thermometer.

Die Antriebssäule trug einen Claisenaufsatz mit anschließendem absteigenden Kühler und Vorlage. Mit Hilfe einer Wasserstrahlpumpe konnte in der Apparatur ein definierter schwacher Unterdruck aufrechterhalten werden. Die elektrische Brücke bestand aus ®Duran Glasrohr mit einer dazwischen geschalteten Kationenaustauschermembran aus Nafion® XR 170. Die Schenkel der Brücke waren mit konzentrierter Schwefelsäure bzw. gesättigter Kaliumchloridlösung gefüllt. Der mit Kaliumchloridlösung gefüllte Schenkel tauchte in das Standgefäß einer gesättigten Kalomel-Elektrode. Arbeits- und Bezugsleketrode waren über ein handelsübliches, hochohmiges Spannungsmeßgerät 19 miteinander verbunden. Daran schloß sich in bekannter Weise ein Regler mit Digitalanzeige für den Betrieb der Salpetersäurepumpe an. Diese Pumpe förderte ein Gemisch von 90% Salpetersäure und 10% Schwefelsäure durch das Tauchrohr in den Siedekessel, aus dem die farblose konzentrierte, etwa 96%ige Schwefelsäure über einen U-förmigen Auslauf kontinuierlich abgezogen wurde. Mit Hilfe von zwei weiteren Pumpen wurde die 70%ige Abfallschwefelsäure sowie getrennt davon 65%ige Salpetersäure über den Claisenaufsatz kontinuierlich dem Kopf der Abtriebssäule zugeführt. Die schwarzbraungefärbte Abfallschwefelsäure hatte die Zusammensetzung 68% Schwefelsäure, 0,66% Kohlenstoff, 0,11% Stickstoff nach Kjeldahl. In der beschriebenen Apparatur wurden 2 Versuche durchgeführt, die nachstehend tabellarisch zusammengefaßt sind.

Versuch 1

| Versuchs-dauer | Eingeregeltes Potential | Einspeisung | HNO$_3$ 100%ig ger. in %, bezogen auf Menge Abfall-schwefelsäure tel quel | | Erzeugte konz. H$_2$SO$_4$ Nitrometerbest. n. Lunge |
|---|---|---|---|---|---|
| | | Abfall-schwefel-säure | | | |
| Zeit-abschnitte in Stunden | m V | g/Stunde | in den Siedekessel | in die Ab-triebssäule | % HNO$_3$ |
| 5 | 980–970 | 836 | 3,2 | 9,6 | — |
| 4,5 | 970 | 851 | 3,3 | 12,6 | 0,63 |
| 5,2 | 970 | 875 | 2,6 | 8,4 | 0,43; 0,62 |
| 5 | 970 | 851 | 4,3 | 9,2 | 0,69; 0,76 |
| 5 | 970 | 837 | 3,2 | 15,0 | 0,84 |
| 5 | 970 | 891 | 3,3 | 8,2 | 0,65; 0,63 |
| 5 | 940 | 849 | 3,3 | 7,1 | 0,56; 0,66 |
| 5,25 | 940 | 883 | 3,6 | 7,3 | 0,57 |
| 5,25 | 940 | 891 | 2,7 | 6,6 | 0,55 |

Gesamtdauer des Versuchs 45,2 Stunden.

Versuch 2

| Versuchs-dauer | Eingeregeltes Potential | Einspeisung | | | | Erzeugte konz. $H_2SO_4$ Nitrometerbest. n. Lunge | |
|---|---|---|---|---|---|---|---|
| | | Abfall-schwefel-säure | HNO$_3$ 100%ig ger. in %, bezogen auf Menge Abfall-schwefelsäure tel quel | | | | |
| Zeit-abschnitte in Stunden | m V | g/Stunde | in den Siedekessel | in die Ab-triebssäule | | % HNO$_3$ | |
| 5,25 | 1050 | 773 | 3,5 | 16,0 | | | – |
| 5 | 1050 | 811 | 3,5 | 10,9 | | | 0,34 |
| 5 | 1050 | 791 | 3,5 | 14,3 | | | 0,45 |
| 5 | 1050 | 788 | 4,3 | 10,4 | | | – |
| 5 | 1050 | 785 | 3,6 | 7,9 | 0,63; | | 0,69 |
| 5,2 | 1050 | 798 | 8,1 | 15,1 | | | – |
| 4,92 | 1050 | 794 | 3,6 | 16,5 | 1,9; | | 1,24 |
| 5 | 1050 | 801 | 3,9 | 14,1 | | | 0,94 |
| 5,2 | 1050 | 789 | 4,4 | 17,5 | 0,85; | | 0,86 |
| 4,75 | 1050 | 768 | 3,7 | 14,5 | | | 0,70 |
| 8,1 | 1050 | 853 | 4,3 | 16,1 | 0,85; | | 0,93 |

Beispiel 2

Bei der in Beispiel 1 beschriebenen Pauling-Apparatur wurde die als Füllkörperkolonne ausgebildete Abtreibssäule durch eine siebenbödige Glockenbodenkolonne aus ®Duran Glas ersetzt. Die untersuchte Abfallschwefelsäure war eine 70%ige Schwefelsäure, die 1,18% Chinolin enthielt. Von dieser Abfallschwefelsäure wurden während 127 Minuten 820 ml auf die Abtriebssäule gegeben. Bei Beginn des Versuches betrug das Potential 760 mV und sank während der Versuchsdauer von 127 Minuten auf 650 mV ab. Anschließend wurden in einer zweiten Versuchsreihe während 135 Minuten 910 ml Abfallschwefelsäure der Abtriebssäule aufgegeben. Ein mit Hilfe des Reglers vorgegebenes Redoxpotential von 950 mV wurde während der zweiten Versuchsphase durch Zufuhr von 57 g 100%iger Salpetersäure eingestellt und aufrechterhalten. Die Salpetersäure wurde als Gemisch von 20% Salpetersäure und 80% Schwefelsäure durch ein Tauchrohr in den Siedekessel eingespeist.

Als Kohlenstoffgehalt des Kesselinhaltes wurden nach Ende der ersten und der zweiten Versuchsphase 0,13% Kohlenstoff bzw. 0,085% Kohlenstoff bestimmt. Diese Meßwerte entsprachen einem 53%igen bzw. 81%igen Abbau der kohlenstoffhaltigen Bestandteile in der ersten und zweiten Versuchsphase.

**Patentansprüche**

1. Vorrichtung zum Bestimmen des Redox-Potentials des Kesselinhaltes und zum Regeln der Zugabe von Oxidationsmitteln beim Regenerieren von verunreinigter, wasserhaltiger Abfallschwefelsäure in Pauling-Apparaturen, wobei der Siedekessel (2) der Pauling-Apparatur eine Elektrode bildet und mittels einer elektrischen Brücke (6) mit einer Bezugselektrode (12) verbunden ist, dadurch gekennzeichnet, daß zur räumlichen Trennung der beiden Elektroden (2, 12) in der elektrischen Brücke eine Kationenaustauschermembran (10) angeordnet ist.

2. Vorrichtung nach Anspruch 1, dadurch gekennzeichnet, daß die elektrische Brücke (6) mit Einlaßöffnungen (8, 9) für Schwefelsäure und Kaliumchloridlösung versehen ist, und die Kationenaustauschermembran (10) zwischen diesen Einlaßöffnungen angeordnet ist.

**0 001 226**

## Claims

1. Equipment for determining the redox potential of the contents of the vessel and for controlling the addition of oxidants on regeneration of contaminated water-containing waste sulfuric acid in Pauling apparatus; the boiler (2) of the Pauling apparatus forming an electrode and being connected to a reference electrode (12) via an electric bridge (6), wherein a cation exchange membrane (10) for spatial separation of the two electrodes (2, 12) is arranged in the electric bridge.

2. Equipment as claimed in claim 1, wherein the electric bridge (6) is provided with inlet openings (8, 9) for sulfuric acid and potassium chloride solution, and the cation exchange membrane (10) is arranged between these inlet openings.

## Revendications

1. Dispositif de détermination du potentiel rédox du contenu de la chaudière et de régulation de l'addition d'oxydants dans de la régénération d'un acide sulfurique résiduaire aqueux souillé dans des installations de Pauling, la chaudière d'ébullition (2) de l'installation de Pauling formant une électrode et étant reliée par un pont électrique (6) à une électrode de référence (12), dispositif caractérisé en ce que pour la séparation spatiale des deux électrodes (2, 12), une membrane échangeuse de cations (10) est disposée dans le pont électrique.

2. Dispositif suivant la revendication 1, caractérisé en ce que le pont électrique (6) est muni d'orifices d'admission (8, 9) pour de l'acide sulfurique et une solution de chlorure de potassium, et en ce que la membrane échangeuse de cations (10) est disposée entre ces orifices d'admission.

FIG.1

FIG. 2